**Europäisches Patentamt**

**European Patent Office**

**Office européen des brevets**

(19)

(11) Veröffentlichungsnummer : **0 097 771**
**B1**

(12) **EUROPÄISCHE PATENTSCHRIFT**

(45) Veröffentlichungstag der Patentschrift :
04.03.87

(51) Int. Cl.⁴ : **G 01 B   3/02**

(21) Anmeldenummer : **83103103.4**

(22) Anmeldetag : **29.03.83**

(54) **Längen- oder Winkelmesssystem.**

(30) Priorität : **26.06.82 DE 3224005**

(43) Veröffentlichungstag der Anmeldung :
**11.01.84 Patentblatt 84/02**

(45) Bekanntmachung des Hinweises auf die Patenterteilung : **04.03.87 Patentblatt 87/10**

(84) Benannte Vertragsstaaten :
**AT CH FR GB IT LI NL SE**

(56) Entgegenhaltungen :
**CH-A-  627 269**
**DE-A- 2 631 233**
**DE-B- 2 518 745**
**DE-B- 2 735 154**
**US-A- 3 816 002**
**US-A- 3 816 003**
**Fachlexikon ABC Physik, Bd. 2: M-Z, Verlag Harri Deutsch, Zürich und Frankfurt am Main, 1974, S. 1411.**

(73) Patentinhaber : **Dr. Johannes Heidenhain GmbH**
**Nansenstrasse 17**
**D-8225 Traunreut (DE)**

(72) Erfinder : **Ernst, Alfons, Dipl.Ing.**
**Traunring 62**
**D-8225 Traunreut (DE)**

EP 0 097 771 B1

**Beschreibung**

Die Erfindung betrifft ein Längen- oder Winkelmeßsystem mit einer Einrichtung zur Fehlerkorrektur gemäß dem Oberbegriff des Anspruchs 1.

Derartige Einrichtungen zur Fehlerkorrektur bei Positionsmeßsystemen sind bereits bekannt. In der DE-B-25 18 745 ist ein Längenmeßsystem beschrieben, bei dem eine lineare Fehlerkorrektur mittels einer an den Enden des Maßstabs angreifenden Dehn- und Staucheinrichtung bewirkt wird ; eine nichtlineare Fehlerkorrektur ist nicht möglich.

Aus der US-A-3 816 002 ist ein Längenmeßsystem bekannt, bei dem ein Maßband in einem Gehäuse mit dem einen Ende starr und mit dem anderen Ende über eine Dehneinrichtung zur linearen Fehlerkorrektur mit dem Gehäuse verbunden ist.

Dem Fachlexikon ABC Physik, Band 2 : M-Z, Verlag Harri Deutsch, Zürich und Frankfurt am Main, 1974, Seite 1411 entnimmt man, daß Unstetigkeitslinien der Spannungen bei der Behandlung der Balken- und Plattenbiegung, bei Kerbproblemen und bei Keilen unter verschiedenen Belastungen auftreten.

In der DE-B-27 35 154, aus der die im Oberbegriff des vorliegenden Anspruchs 1 aufgeführten Merkmale bekannt sind, ist ein Positionsmeßsystem offenbart, bei dem zur Fehlerkorrektur der Maßstab an mindestens einer Stelle etwa senkrecht zur Teilungsebene unter Druck- oder Zugeinwirkung entsprechend den Fehlerwerten ausgelenkt wird. Solche Auslenkungen des Maßstabs sind aber dann von Nachteil, wenn die Abtasteinheit nicht auf der Teilungsebene des Maßstabs geführt werden kann, so daß sich Meßungenauigkeiten durch Abstandsschwankungen zwischen der Abtasteinheit und der Teilungsebene des Maßstabs ergeben können.

Der im Anspruch 1 definierten Erfindung liegt die Aufgabe zugrunde, bei einem Längen- oder Winkelmeßsystem mit einfachen Mitteln eine Korrektur von Fehlern, insbesondere von Teilungsfehlern und/oder Maschinenfehlern, anzugeben, die universell einsetzbar ist.

Die mit der Erfindung erzielten Vorteile bestehen insbesondere darin, daß sowohl eine lineare als auch eine nichtlineare Fehlerkorrektur mit größerem Korrekturbereich ermöglicht wird, ohne daß die Ebenheit der Teilungsfläche des Maßstabs (Teilungsträgers) beeinträchtigt wird.

Weitere vorteilhafte Ausbildungen der Erfindung entnimmt man den abhängigen Ansprüchen 2 bis 6.

Ausführungsbeispiele der Erfindung werden anhand der Zeichnung näher erläutert.

Es zeigen

Figuren 1a, b einen Querschnitt und einen Längsschnitt eines Längenmeßsystems und

Figuren 2 bis 8 verschiedene Maßstäbe mit Merkmalen nach der Erfindung.

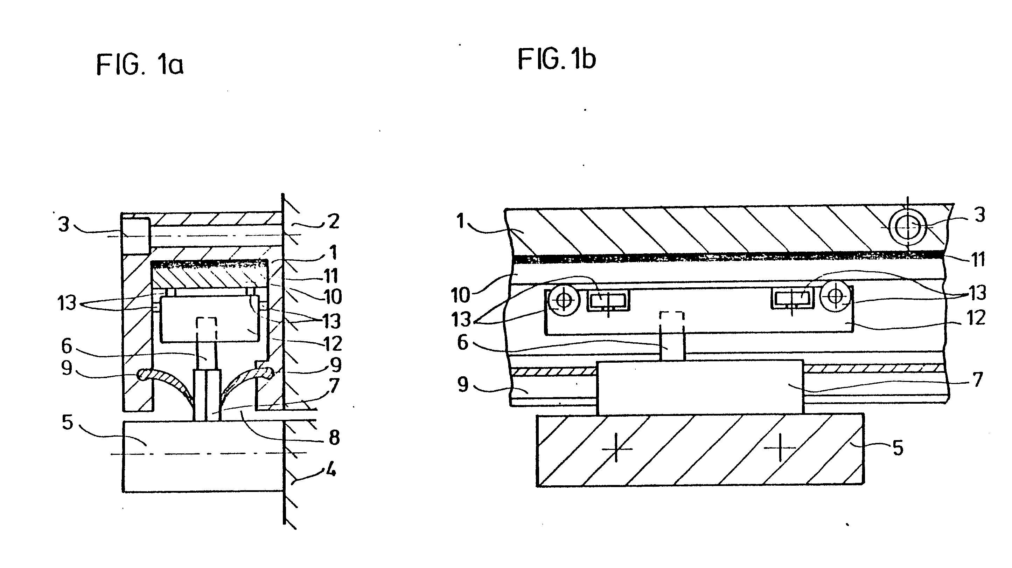

Nach den Figuren 1a, b ist ein Längenmeßsystem mit einem Gehäuse 1 in Form eines Hohlprofils an einem Bett 2 einer nicht dargestellten Bearbeitungsmaschine mittels einer Schraubverbindung 3 befestigt. An einem Schlitten 4 der Bearbeitungsmaschine ist ein Montagefuß 5 mit einem Mitnehmer 6 in beliebiger Weise befestigt, der über eine schwertförmige Verjüngung 7 durch einen Schlitz 8 in das im übrigen vollkommen geschlossene Gehäuse 1 hineinragt, wobei im Schlitz 8 vorgesehene elastische Dichtlippen 9 ein Eindringen von Verunreinigungen in das Innere des Gehäuses 1 verhindern. An einer Innenfläche des Gehäuses 1 ist ein Maßstab 10 mittels einer elastischen Klebeschicht 11 angebracht, an dem sich eine Abtasteinheit 12 über Rollen 13 abstützt und mit bekannten, nicht dargestellten Mitteln in Form einer Beleuchtungseinrichtung, einer Abtastplatte und von Photoelementen die Teilung des Maßstabs 10 abtastet ; die bei der Abtastung der Teilung von der Abtasteinheit 12 gewonnenen periodischen Analogsignale werden einer nicht gezeigten Auswerte-/Anzeigeeinheit zur digitalen Anzeige der Relativlage zwischen Schlitten 4 und Bett 2 zugeführt. Die Relativbewegung des Schlittens 4 bezüglich des Betts 2 wird vom Mitnehmer 6 auf die Abtasteinheit 12 übertragen.

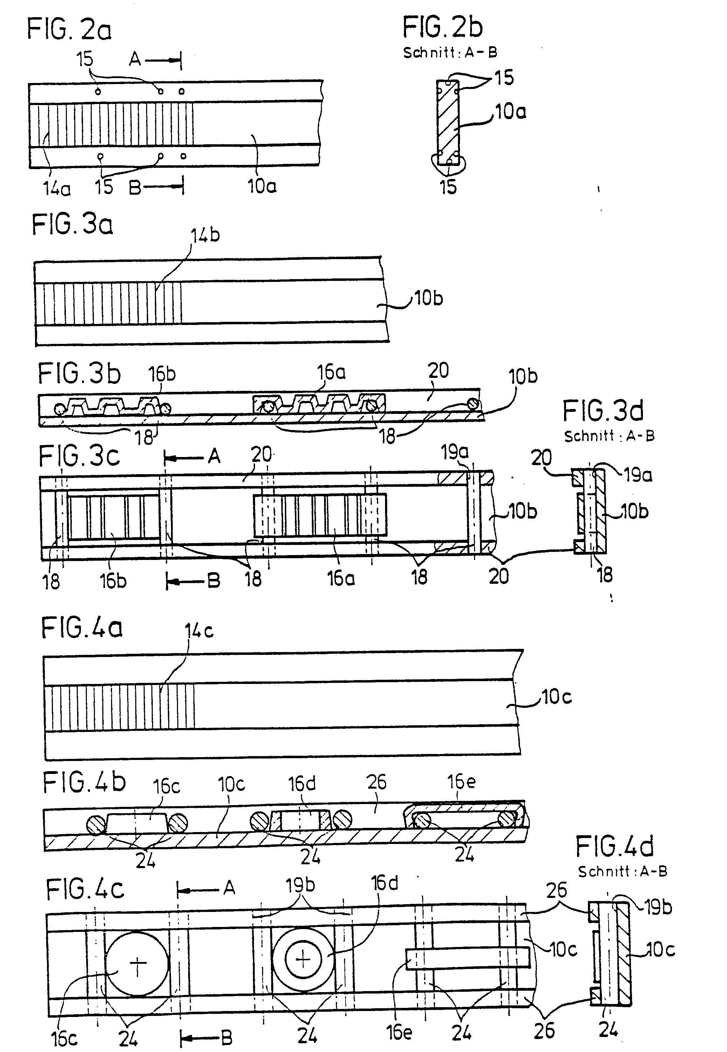

In den Figuren 2 bis 8 sind Maßstäbe 10 mit Merkmalen der Erfindung dargestellt. Figuren 2a, b zeigen in einer Draufsicht und in einem Querschnitt einen metallischen Maßstab 10a mit einer Teilung 14a, bei dem die Erzeugung von Längsspannungen für partielle Längenänderungen (Dehnungen) des Maßstabs 10a gemäß dem jeweiligen Fehlerverlauf durch Eindrücken von Senkungen 15 oder Kerben in die Außenflächen des Maßstabs 10a bewirkt wird. Das Eindrücken der Senkungen 15 oder Kerben erfolgt vorzugsweise mit Hilfe von kegelförmigen oder keilförmigen Werkzeugen, die nicht dargestellt sind, oder durch partielles Anwalzen des Maßstabs.

Figuren 3a bis d zeigen in zwei Draufsichten und in zwei Schnitten einen Maßstab 10b mit einer Teilung 14b, bei dem die Erzeugung von Längsspannungen für partielle Längenänderungen des Maßstabs 10b gemäß dem jeweiligen Fehlerverlauf durch Federelemente in Form von Zugfedern 16a und Druckfedern 16b bewirkt wird, die quer zur Längserstreckung des Maßstabs 10b verlaufende Bolzen 18 beaufschlagen, die in Bohrungen 19a in längsverlaufenden Randleisten 20 des Maßstabs 10b befestigt sind.

Figuren 4a bis d zeigen in zwei Draufsichten und in zwei Schnitten einen Maßstab 10c mit einer Teilung 14c, bei dem die Erzeugung von Längsspannungen für partielle Längenänderungen des Maßstabs 10c gemäß dem jeweiligen Fehlerverlauf durch Federelemente in Form einer konischen Scheibe 16c, eines konischen Ringes 16d und einer Klammer 16e bewirkt wird, die quer zur Längserstreckung des Maßstabs 10c verlaufende Bolzen 24 beaufschlagen, die in Bohrungen 19b in längsverlaufenden Randleisten 26 des Maßstabs 10c befestigt sind. Die konische Scheibe 16c und der konische Ring 16d sind zwischen je zwei Bolzen 24 geklemmt und bewirken eine Dehnung des Maßstabs 10c in diesen Bereichen, während die Klammer 16e die beiden Bolzen 24 umgreift und eine Stauchung des Maßstabs 10c in diesem Bereich zur Folge hat. Die Bolzen 24 tragen aufgrund ihrer Elastizität zur Federwirkung bei.

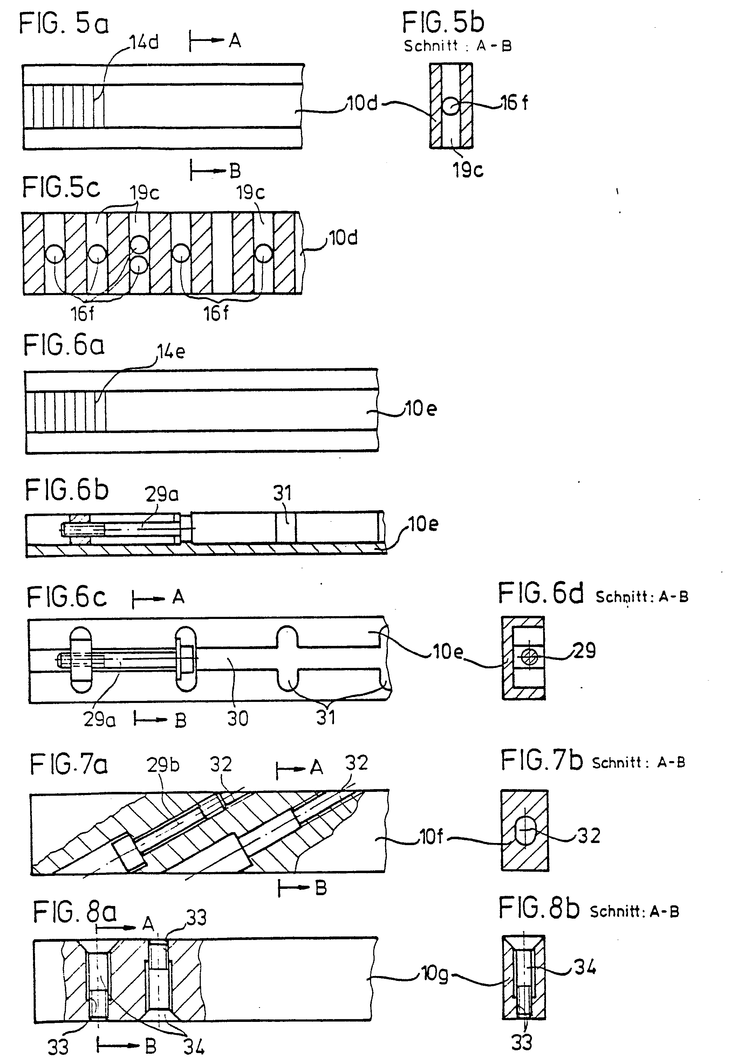

In den Figuren 5a bis c ist in einer Draufsicht und in zwei Schnitten ein Maßstab 10d mit einer Teilung 14d dargestellt, bei dem die Erzeugung von Längsspannungen für partielle Längenänderungen des Maßstabs 10d gemäß dem jeweiligen Fehlerverlauf durch Kugeln 16f bewirkt wird, die in quer zur Längserstreckung des Maßstabs 10d und parallel zur Teilung 14d verlaufende äquidistante Bohrungen 19c eingepreßt sind ; die Anzahl der eingepreßten Kugeln 16f in den einzelnen Bohrungen 19c bestimmt das Maß der Dehnung des Maßstabs 10d. Neben Kugeln 16f können auch Zylinderstifte verwendet werden.

In nicht gezeigter Weise können auch Dehnschrauben Verwendung finden. Die Bolzen 18, 24 können auch durch quer verlaufende Schlitze, Stege oder Absätze im Maßstabskörper ersetzt werden.

In den Figuren 6a bis d ist in zwei Draufsichten und in zwei Schnitten ein Maßstab 10e mit einer Teilung 14e gezeigt, bei dem die Erzeugung von Längsspannungen für partielle Längenänderungen des Maßstabs 10e gemäß dem jeweiligen Fehlerverlauf durch längsverlaufende Zugschrauben 29a bewirkt wird, die in einer im Maßstab 10e angeordneten Längsnut 30 mit Quernuten 31 angeordnet sind. In nicht dargestellter Weise können neben Zugschrauben 29a zur Stauchung des Maßstabs 10e auch Druckschrauben zur Dehnung des Maßstabs angeordnet sein.

In den Figuren 7a, b ist in einem Längsschnitt und in einem Querschnitt ein Maßstab 10f dargestellt, zu dessen Stauchung in diesem Bereich eine Zugschraube 29b in einer schräg zur Längserstreckung des Maßstabs 10f verlaufenden Gewindebohrung 32 angeordnet ist.

Figuren 8a, b zeigen einen Maßstab 10g in einem Teilschnitt und in einem Querschnitt, bei dem durch quer zur Längserstreckung des Maßstabs 10g in Gewindebohrungen 33 angeordnete Zugschrauben 34 Querkontraktionen im Maßstab 10g hervorgerufen werden, die Längsspannungen für partielle Längenänderungen des Maßstabs 10g gemäß dem jeweiligen Fehlerverlauf erzeugen.

Bei Maßstäben, bei denen aufgrund thermischer oder mechanischer Vorbehandlung eine vorgegebene Längsspannung vorhanden ist, können durch ortsabhängiges Lösen dieser Spannung partielle Längenänderungen des Maßstabs gemäß dem jeweiligen Fehlerverlauf erzielt werden. Dieses Lösen der vorgegebenen Spannung kann durch Querschnittsverminderungen des Maßstabs auf chemischem Wege (chemisches Ätzen), physikalischem Weg (Plasma-ätzen), mechanischem Wege (Bohren, Fräsen, Schleifen, Gravieren, Sandstrahlen) oder auf thermischem Wege (Laserstrahl) erfolgen. Das Werkzeug zum Lösen der vorgegebenen Spannung kann mit Hilfe eines Rechners nach dem Ergebnis einer Messung gesteuert werden.

**Patentansprüche**

1. Längen- oder Winkelmeßsystem zur Messung der Relativlage zweier gegeneinander verschiebbarer Objekte mit einer Einrichtung zur Korrektur von Fehlern, insbesondere von Teilungsfehlern und/oder Maschinenfehlern, bei dem ein eine Teilung aufweisender Teilungsträger (10) mit dem einen Objekt (2) und eine die Teilung des Teilungsträgers (10) abtastende Abtasteinheit (12) mit dem anderen Objekt (4) verbunden ist, wobei zur Fehlerkorrektur Längenänderungen des Teilungsträgers in Meßrichtung erzeugt werden, dadurch gekennzeichnet, daß diese Längenänderungen mittels allein am Teilungsträger (10) vorgesehener, Längsspannungen erzeugender Elemente (16a bis 16e ; 29a, 29b ; 34) oder durch partielle Materialverdrängung allein im Teilungsträger (10) oder durch ortsabhängige Variation vorgegebener innerer Längsspannungen allein im Teilungsträger (10) entweder durch Querschnittsverminderungen oder durch thermische Spannungsänderung im Teilungsträger (10) erzeugt sind.

2. Meßsystem nach Anspruch 1, dadurch gekennzeichnet, daß die Längenänderungen des Teilungsträgers (10a) durch Eindrücken von Senkungen (15) oder Kerben in wenigstens eine Außenfläche des Teilungsträgers (10a) erzeugt sind.

3. Meßsystem nach Anspruch 1, dadurch gekennzeichnet, daß die Längenänderungen des Teilungsträgers (10b, 10c) durch Anordnung wenigstens eines Federelements (16a bis 16e) zwischen Teilflächen (19a, 19b) des Teilungsträgers (10b, 10c) erzeugt sind, wobei die Teilflächen (19a, 19b) quer oder schräg zur Längserstreckung des Teilungsträgers (10b, 10c) verlaufen.

4. Meßsystem nach Anspruch 1, dadurch gekennzeichnet, daß die Längenänderungen des Teilungsträgers (10e, 10f) durch Anordnung wenigstens einer längs- oder schrägverlaufenden Zugschraube (29a, 29b) und/oder Druckschraube am Teilungsträger (10e, 10f) erzeugt sind.

5. Meßsystem nach Anspruch 1, dadurch gekennzeichnet, daß die Längenänderungen des Teilungsträgers (10g) durch Querkontraktionen im Teilungsträger (10g) erzeugt sind.

6. Meßsystem nach Anspruch 1, dadurch gekennzeichnet, daß die Längenänderungen des Teilungsträgers (10d) durch in Bohrungen (19c) des Teilungsträgers (10d) eingepreßte Kugeln (16f) erzeugt sind.

**Claims**

1. Length and angle measuring system for measuring the relative position of two objects which can be displaced relative to one another, having a device for correcting errors, in particular errors of graduation and/or machine errors, in which system a graduation bearer (10) having a graduation is connected to one object (2) and a scanning unit (12) scanning the graduation of the graduation bearer (10) is connected to the other object (4), with changes in length of the graduation bearer being produced in the measuring direction in order to correct errors, characterized in that these changes in length are produced by means of elements (16a to 16e ; 29a, 29b ; 34) provided only on the graduation bearer (10) and producing longitudinal stresses, or by partial material displacement only in the graduation bearer (10) or by locus-dependent variation of predetermined internal longitudinal stresses only in the graduation bearer (10), either by reductions in cross-section or by thermal stress change in the graduation bearer (10).

2. Measuring system according to Claim 1, characterized in that the changes in length of the graduation bearer (10a) are produced by impressing depressions (15) or notches into at least one outer surface of the graduation bearer (10a).

3. Measuring system according to Claim 1, characterized in that the changes in length of the graduation bearer (10b, 10c) are produced by the arrangement of at least one spring element (16a to 16e) between partial surfaces (19a, 19b) of the graduation bearer (10b, 10c), with the partial surfaces (19a, 19b) running transversely or at an angle to the longitudinal extent of the graduation bearer (10b, 10c).

4. Measuring system according to Claim 1, characterized in that the changes in length of the graduation bearer (10e, 10f) are produced by the arrangement of at least one longitudinally or transversely running tension screw (29a, 29b) and/or thrust screw on the graduation bearer (10e, 10f).

5. Measuring system according to Claim 1, characterized in that the changes in length of the graduation bearer (10g) are produced by contractions in cross-section in the graduation bearer (10g).

6. Measuring system according to Claim 1, characterized in that the changes in length of the graduation bearer (10d) are produced by balls pressed into bores (10c) of the graduation bearer (10d).

**Revendications**

1. Système de mesure de longueurs ou d'angles pour mesurer la position relative de deux objets déplaçables l'un par rapport à l'autre, comportant un dispositif pour la correction des erreurs, en particulier des erreurs de graduation et/ou des erreurs de machine, et dans lequel une échelle (10), portant une graduation, est raccordée à l'un des objets (2), et une unité de balayage (12), explorant la graduation de l'échelle (10), est raccordée à l'autre objet (4), des variations de longueur de l'échelle étant produites dans le sens de la mesure pour la correction des erreurs, caractérisé par le fait que ces variations de longueur sont obtenues au moyen d'éléments (16a à 16e ; 29a, 29b ; 34) prévus seulement sur l'échelle (10) et produisant des efforts longitudinaux, ou par refoulement partiel du matériau seulement dans l'échelle (10) ou par variation locale des contraintes longitudinales internes prédéterminées seulement dans l'échelle (10), soit par des réductions de la section transversale, soit par variation thermique de la contrainte dans l'échelle (10).

2. Système de mesure selon la revendication 1, caractérisé par le fait que les variations de longueur de l'échelle (10a) sont obtenues par impression de creux (15) ou d'entailles dans au moins une surface externe de l'échelle (10a).

3. Système de mesure selon la revendication 1, caractérisé par le fait que les variations de longueur de l'échelle (10b, 10c) sont obtenues en installant au moins un élément élastique (16a à 16e) entre des surfaces partielles (19a, 19b) de l'échelle (10b, 10c), les surfaces partielles (19a, 19b) étant disposées transversalement ou obliquement par rapport au sens longitudinal de l'échelle (10b, 10c).

4. Système de mesure selon la revendication 1, caractérisé par le fait que les variations de longueur de l'échelle (10e, 10f) sont obtenues en installant au moins une vis de traction (29a, 29b) et/ou une vis de compression disposée longitudinalement ou obliquement sur l'échelle (10e, 10f).

5. Système de mesure selon la revendication 1, caractérisé par le fait que les variations de longueur de l'échelle (10g) sont obtenues au moyen de contractions transversales de l'échelle (10g).

6. Système de mesure selon la revendication 1, caractérisé par le fait que les variations de longueur de l'échelle (10d) sont obtenues par des billes (16f) engagées dans des perçages (19c) de l'échelle (10d).

# FIG. 1a

# FIG. 1b

0 097 771

FIG. 2a

FIG. 2b
Schnitt : A – B

FIG. 3a

FIG. 3b

FIG. 3d
Schnitt : A – B

FIG. 3c

FIG. 4a

FIG. 4b

FIG. 4d
Schnitt : A – B

FIG. 4c

# 0 097 771

**FIG. 5a**

14d · A

**FIG.5b**
Schnitt : A - B

10d · 16f · 19c

**FIG.5c** · 19c · 19c · 10d

16f · 16f

**FIG.6a** · 14e · 10e

**FIG.6b** · 29a · 31 · 10e

**FIG.6c** · A · **FIG.6d** Schnitt: A-B

10e · 29

29a · B · 30 · 31

**FIG.7a** · 29b · 32 · A · 32 · **FIG.7b** Schnitt : A-B

10f · 32

B

**FIG.8a** · A · 33 · **FIG.8b** Schnitt: A-B

10g · 34

33 · B · 34 · 33

3